# EUROPEAN PATENT SPECIFICATION

(11) **EP 2 854 413 B1**
(45) Date of publication and mention of the grant of the patent: **20.09.2017**
(21) Application number: 14003287.1
(22) Date of filing: 23.09.2014
(51) Int. Cl.: H04N 21/438, H04N 21/443, H04N 21/61, H04N 21/6437

(54) **Internet protocol television and operating method thereof**
Fernsehen über Internetprotokoll und Betriebsverfahren dafür
Télévision à protocole Internet et son procédé de fonctionnement

(30) Priority: 30.09.2013 KR 20130116673
(43) Date of publication of application: 01.04.2015
(73) Proprietor: LG ELECTRONICS INC., Yeongdeungpo-Gu Seoul 150-721 (KR)
(72) Inventor: Park, Beomki, 137-893 Seoul (KR); Kang, Hojong, 137-893 Seoul (KR); Yu, Yongha, 137-893 Seoul (KR); Kim, Donguk, 137-893 Seoul (KR)
(74) Representative: Frenkel, Matthias Alexander

(56) References cited:
- US-A1- 2008 005 776
- US-A1- 2008 117 911
- US-B1- 6 246 683
- CISCO SYSTEMS INC ET AL: "RTP/UDP/MPEG2 TS as a means of transmission for IPTV Streams;FGIPTV-ID-0087e", ETSI DRAFT; FGIPTV-ID-0087E, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. zArchive, 21 July 2006 (2006-07-21), pages 1-3, XP014148909, [retrieved on 2006-07-21]

## Description

### BACKGROUND OF THE INVENTION

### Field of the Invention

The present invention relates to an IPTV (Internet Protocol TV), and more specifically, to an IPTV having enhanced data processing efficiency and a method for driving the same.

### Discussion of the Related Art

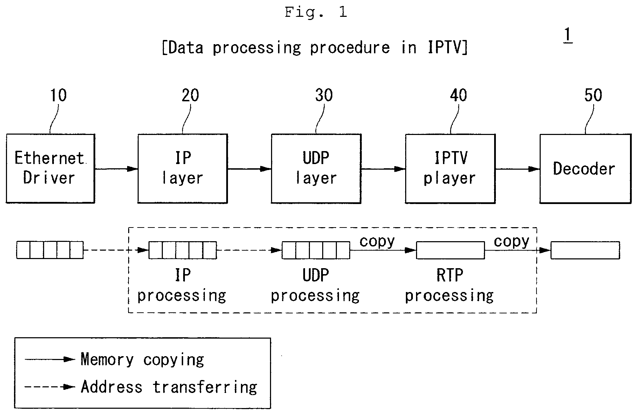

An IPTV typically uses UDP (User Datagram Protocol/IP (Internet Protocol)) as its transmission protocol for real-time broadcast data transmission, and uses RTP (Real-time Transport Protocol) as its transmission protocol for transmission of additional data. The data processing procedure of a related art IPTV 1 is represented in Fig. 1.

That is, Fig. 1 schematically illustrates a broadcast signal processing procedure of a related art IPTV. Referring to Fig. 1, the IPTV 1 includes an Ethernet driver 10, an IP (Internet Protocol) layer 20, a UDP (User Datagram Protocol) layer 30, an IPTV player 40, and a decoder 50.

If a broadcast signal is received through the Ethernet driver 10, the received broadcast signal passes through the IP layer 20 and the UDP layer 30, and the IP header and the UDP header of the data packet in the received broadcast signal are processed. The IP/UDP layers 20 and 30 parse the IP/UDP headers and repeatedly perform the task of calculating a checksum value in order to check packet errors. Because the broadcast signal is received with the same pattern in the IPTV, such repeated task may be meaningless.

Further, the data output from the UDP layer 30 is transferred to the IPTV player 40, and the IPTV player 40 examines the RTP header from the data received from the UDP layer 30 to perform a proper process, stores the RTP payload in a buffer memory so the decoder 50 can access and process it, and then delivers it to the decoder 50.

In other words, as described above, the related art IPTV 1 requires the process of copying and storing the payload of the UDP packet in the buffer memory and copying and storing the payload of the RTP packet in the buffer memory. The repetition of such process of copying and storing in the buffer memory deteriorates the performance of the IPTV system. In addition, the decoder 50 can then perform a broadcast reproduction function based on the data delivered from the IPTV player 40.

As described above, the above process is repeatedly performed in high-speed broadcast signal processing for achieving high-quality images, and this increases the IPTV system load. As a result, the related art IPTV system suffers from a deterioration of system performance.

US 2008/0005776 describes systems and methods of assembling an elementary stream from an encapsulated multimedia transport stream are disclosed. An exemplary method includes: receiving a command from a user mode video playback component; in response, processing layer-2 packets received through a network interface driver binding to assemble, into an MPEG elementary stream, multimedia transport packets encapsulated within; and supplying the stream to a decoder.

US 2008/0117911 describes a method of receiving data from a first computing device to a second computing device through a network is disclosed. The transfer adheres to a packet-based network protocol. A connection between the first and second computing devices is established according to the protocol. A data packet is received from the first device at the second device, where the data packet includes payload data and a header. A packet header template is defined for acknowledging receipt of the data packet, and the template has static fields filled with static values and variable fields that can acquire packet-dependent values. The header template is stored in a memory device of the second device. Packet-dependent values of the variable fields of the template are updated. An ACK packet that includes a copy of the updated packet header is sent from the first computing device to the second computing device to acknowledge the receipt of the packet.

### SUMMARY OF THE INVENTION

An object of the present invention is to provide an IPTV that enhances data processing efficiency by previously performing a protocol-related processing procedure on broadcast signals in an Ethernet driver or IP tuner and a method for driving the same.

Another object of the present invention is to provide an IPTV that enhances data processing efficiency by storing a result of performing a protocol-related processing procedure on the broadcast signals in the size and form appropriate for decoding and a method for driving the same.

Still another object of the present invention is to provide an IPTV that enhances data processing efficiency by reducing the number of times of storing in the memory, as required during the broadcast signal processing procedure and a method for driving the same.

The invention is defined by the appended claims. To achieve the above objects, according to the embodiments of the present invention, an IPTV (Internet Protocol TeleVision) may include an Ethernet driver; an IP tuner; a buffer memory; an IPTV player; and a decoder.

The Ethernet driver can be configured to receive a broadcast signal, extract a data packet from the received broadcast signal, and store the extracted data packet. The IP tuner can also be configured to convert the extracted data packet into a form that can be accessed and utilized by the decoder and to store the converted data packet in the buffer memory.

The IPTV player can be configured to transfer a memory address storing the converted data packet to the decoder, and the decoder can be configured to access the converted data packet stored in the buffer memory based on the memory address to perform a broadcast reproduction function.

The broadcast signal may include real-time broadcast data transmitted based on a first protocol and additional information transmitted based on a second protocol.

The Ethernet driver can be configured to extract the data packet from the broadcast signal by performing the first protocol-related process on the received broadcast signal. The IP tuner can be configured to perform the second protocol-related process on the extracted data packet and to store the data packet that has undergone the second protocol-related process in a specific region assigned to the decoder in the buffer memory.

The IP tuner includes an IP tuner controller configured to receive information for performing an operation requested by the IPTV player from the IPTV player; a packet extracting unit configured to extract a data packet necessary for performing the requested operation from the extracted data under control of the IP tuner controller; a process treating unit configured to perform the second protocol-related process on the data packet extracted by the packet extracting unit under control of the IP tuner controller; and a data managing unit configured to store the data packet processed by the process treating unit in a specific region of the buffer memory assigned to the decoder under control of the IP tuner controller.

The data managing unit can be configured to store only payload of the data packet processed by the process treating unit in the specific region of the buffer memory. If the storing in the specific region of the buffer memory is complete, the IPTV player can be configured to transfer an address of the specific region to the decoder.

The Ethernet driver can be configured to extract the data packet from the broadcast signal by performing the first protocol-related process and the second protocol-related process on the received broadcast signal.

To achieve the above objects, according to the embodiments of the present invention, methods for controlling an IPTV apparatus are provided. The methods may include by the Ethernet driver, receiving a broadcast signal, extracting a data packet from the received broadcast signal and storing the extracted data packet; by the IP tuner, converting the extracted data packet into a form that may be accessed and utilized by the decoder and storing the converted data packet in the buffer memory; by the IPTV player, transferring a memory address storing the converted data packet to the decoder; and by the decoder, accessing the buffer memory based on the memory address to perform an audio and video reproducing function.

The broadcast signal may include real-time broadcast data transmitted based on a first protocol and additional information transmitted based on a second protocol.

The Ethernet driver can be configured to extract the data packet from the broadcast signal by performing the first protocol-related process on the received broadcast signal, and the IP tuner can be configured to perform the second protocol-related process on the extracted data packet and to store the data packet that has undergone the second protocol-related process in a memory block assigned to the decoder in the buffer memory.

The Ethernet driver can be configured to extract the data packet from the broadcast signal by performing the first protocol-related process and the second protocol-related process on the received broadcast signal.

The above-described IPTV controlling methods may be implemented by executing a computer program for realizing the mobile terminal driving method stored in a recording medium readable by a computer.

By the IPTV and its controlling methods, a protocol-related processing procedure for a broadcast signal is previously performed in an Ethernet driver or IP tuner, thus leading to an enhancement in data processing efficiency.

By the IPTV and its controlling methods, a result of performing the protocol-related processing procedure on the broadcast signal is stored in the size and form appropriate for decoding, thus leading to an enhancement in data processing efficiency.

By the IPTV and its controlling methods, the number of times of storing in memory, required during the broadcast signal processing procedure is reduced, thus leading to an enhancement in data processing efficiency.

An additional scope of applicability of the present invention will be apparent from the following detailed description. However, it may be appreciated by those of ordinary skill in the art that various changes and modifications may be made thereto without departing from the scope of the present invention, and it should be noted that the specific embodiments set forth herein are provided only for an example.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.
Fig. 1 schematically illustrates a broadcast signal processing procedure of a related art IPTV;
Fig. 2 is a block diagram illustrating an IPTV according to an embodiment of the present invention;
Fig. 3 is a flowchart illustrating a method for driving an IPTV according to an embodiment of the present invention;
Fig. 4 is an overview illustrating an example of performing a protocol-related process including header removal in an IPTV according to an embodiment of the present invention;
Fig. 5 is a block diagram illustrating an example IP tuner included in an IPTV according to an embodiment of the present invention; and
Fig. 6 is a flowchart illustrating a method for driving an IPTV including a data processing procedure performed in an IP tuner as shown in Fig. 5.

### DETAILED DESCRIPTION

The foregoing objects, features, and advantages of the present invention may be apparent from the following detailed description taken in conjunction with the accompanying drawings. Hereinafter, preferred embodiments of the present invention will be described with reference to the drawings. The same reference numerals are used to denote the same elements throughout the specification. When determined to make the gist of the present invention unnecessarily unclear, the detailed description of the known art will be omitted.

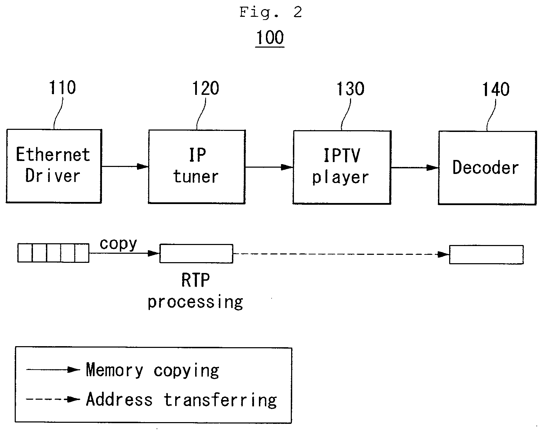

Hereinafter, image outputting devices according to an embodiment of the present invention will be described in detail with reference to the drawings. In particular, Fig. 2 is a block diagram illustrating an IPTV 100 according to an embodiment of the present invention. Referring to Fig. 2, the IPTV 100 includes an Ethernet driver 110, an IP tuner 120, an IPTV player 130, and a decoder 140. The IPTV 100 may have more or less components than those shown in Fig. 2. Hereinafter, the components are described one by one.

The Ethernet driver 110 can receive a broadcast signal, extract a data packet from the received broadcast signal and store the extracted data packet. The broadcast signal may include real-time broadcast data transmitted based on a first protocol and additional information transmitted based on a second protocol. Here, the first protocol may be UDP, and the second protocol may be RTP. However, the scope of the present invention is not limited thereto.

The Ethernet driver 110 can extract the data packet from the broadcast signal by performing a first protocol-related process on the received broadcast signal. For example, the Ethernet driver 110 can extract the data packet from the broadcast signal by performing an IP/UDP-related process containing a process of removing the IP header and UDP header for the received broadcast signal.

Such processes correspond to the processes performed in the IP layer 20 and the UDP layer 30 of the related art IPTV 1 as shown in Fig. 1. That is, the IPTV 100 performs such processes in the Ethernet driver 110, thus mitigating the load to the data processing procedure in the IPTV 100.

According to an embodiment, the Ethernet driver 110 can also perform the second protocol-related process on the received broadcast signal. For example, the Ethernet driver 110 can perform an RTP-related process containing a process of removing the RTP header. Such process corresponds to the process performed by the IPTV player 40 of the related art IPTV 1. That is, the IPTV 100 can perform such processes in the Ethernet driver 110, thus mitigating the load to the data processing procedure.

Further, the IP tuner 120 converts the data packet extracted by the Ethernet driver 110 in the form that may be accessed and utilized by the decoder and stores it in a buffer memory. For example, the IP tuner 120 can store the data packet output from the Ethernet driver 110 in a specific block of the buffer memory assigned to the decoder 140.

In this instance, the data packet is converted in the size and form utilized by the decoder 140 and is stored in the specific block. Accordingly, the decoder 140 can immediately access the specific block to perform a broadcast reproduction function. Because the decoder 140 in the IPTV 100 immediately accesses the data packet processed by the IP tuner 120 to perform the broadcast reproduction function, the IPTV 100 can have further enhanced performance as compared with the related art IPTV.

When the first protocol-related process has been performed by the Ethernet driver 110, the IP tuner 120 can perform the second protocol-related process on the data packet output from the Ethernet driver 110. For example, the IP tuner 120 can perform an RTP-related process including a process of removing the RTP header for the data packet output from the Ethernet driver 110.

However, when the second protocol-related process is performed by the Ethernet driver 110, the IP tuner 120 may not perform the second protocol-related process. Meanwhile, the Ethernet driver 110 and the IP tuner 120 may have partially common hardware-like or software-like configurations. The IPTV player 130 can also transfer a memory address containing the converted data packet to the decoder 140.

The decoder 140 can then access the converted data packet stored in the buffer memory based on the memory address to perform the broadcast reproduction function. Meanwhile, in the block corresponding to the memory address is stored the data extracted from the broadcast signal not in a unit of data packets but in the size and form that can be immediately accessed and utilized by the decoder 140. Thus, the IPTV 100 has an enhanced performance as compared with the related art IPTV 1.

As described above in connection with Fig. 2, the memory copying process is performed only once in the data processing procedure of the IPTV 100 according to an embodiment of the present invention. However, in the data processing procedure of the related art IPTV 1 shown in Fig. 1, the memory copying process occurs twice. As such, the IPTV 100 according to an embodiment of the present invention has an enhanced data processing efficiency because of the reduction in the number of times of performing the memory copying process.

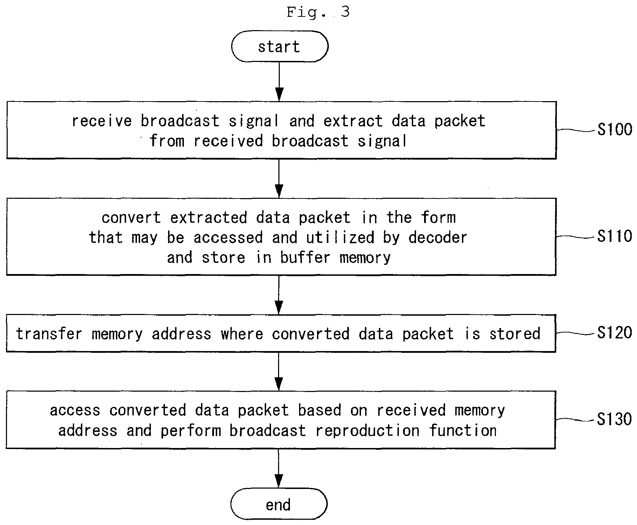

Next, Fig. 3 is a flowchart illustrating an example method for driving an IPTV 100 according to an embodiment of the present invention. As shown, if a real-time broadcast signal is received through the Ethernet driver 110, the Ethernet driver 110 extracts a data packet from the received broadcast signal (S100). At this time, the Ethernet driver 110 may perform a process, such as header removal corresponding to a related protocol, on the received broadcast signal.

Then, the IP tuner 120 converts the data packet extracted by the Ethernet driver 110 into the form that can be accessed and utilized by the decoder 140 and stores it in the buffer memory (S120). Further, the IP tuner 120 may also perform a process, such as header removal, corresponding to a necessary related-protocol, on the extracted data.

If storing the data converted by the IP tuner 120 is complete, the IPTV player 130 transfers the memory address containing the converted data packet to the decoder 140 (S120), and the decoder 140 can immediately access the converted data packet based on the received memory address to perform a broadcast reproduction function (S130).

Thus, the above driving method has the features of (1) the protocol-related process for the received broadcast signal is performed at a broadcast signal reception end including the Ethernet driver 110 and the IP tuner 120, (2) memory copying in the process of obtaining data used for reproducing broadcast is performed only once, and (3) the data used for reproducing broadcast is stored in the form that can be immediately accessed and reproduced by the decoder only by the process at the broadcast signal reception end. Based on such features, the IPTV 100 according to an embodiment of the present invention offers further enhanced data processing efficiency as compared with the related art IPTV 1.

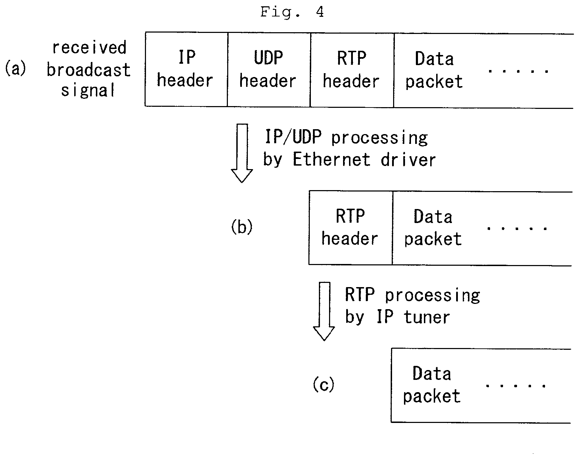

Next, Fig. 4 illustrates an example of performing a protocol-related process including, e.g., header removal, in an IPTV 100 according to an embodiment of the present invention. In particular, Fig. 4(a) shows the data architecture of a broadcast signal received through the Ethernet driver 110. Referring to Fig. 4(a), the received broadcast signal includes an IP header, a UDP header, an RTP header, and a data packet.

The Ethernet driver 110 can perform an IP/UDP-related process for removing the IP header and the UDP header on the received broadcast signal. As shown in Fig. 4(b), the received broadcast signal is then rendered to have the form including the RTP header and the data packet.

The IP tuner 120 can perform an RTP-related process including RTP header removal on the data output from the Ethernet driver 110. As shown in Fig. 4(c), the received broadcast signal can be then processed to have the structure that has only the data packet. Further, the IP tuner 120 can store only the RTP payload of the data packet in the memory block assigned to the decoder 140 in the size and form that can be immediately accessed and utilized by the decoder 140.

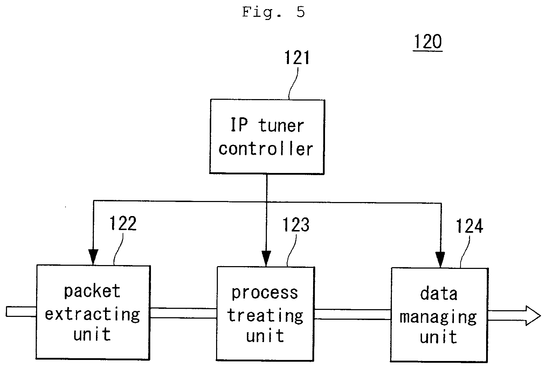

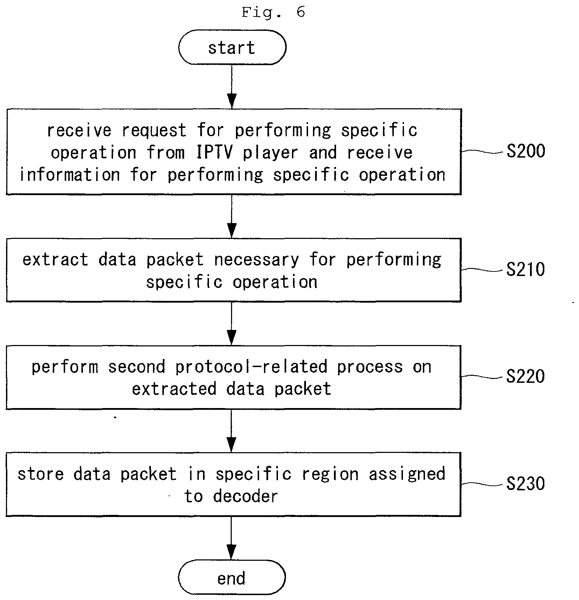

Fig. 5 is a block diagram illustrating an example IP tuner 120 included in an IPTV 100 according to an embodiment of the present invention, and Fig. 6 is a flowchart illustrating an example method for driving the IPTV 100 including a data processing procedure performed in the IP tuner 120 shown in Fig. 5. Meanwhile, the example IP tuner 120 shown in Fig. 5 is related to when a protocol-related process has been primarily conducted on the broadcast signal received by the Ethernet driver 110.

Referring to Fig. 5, the IP tuner 120 includes an IP tuner controller 121, a packet extracting unit 122, a process treating unit 123, and a data managing unit 124. In addition, the IP tuner 120 may have more or less components than those shown in Fig. 5.

As shown in Fig. 6, the IP tuner controller 121 receives a request for performing a specific operation from the IPTV player 130 and receives information for performing the requested specific operation from the IPTV player 130 (S200). Here, the information received from the IPTV player 130 may contain an IP address corresponding to multimedia that should be received, port information, or the address and size of a memory in which the data should be stored. However, the scope of the present invention is not limited thereto.

The packet extracting unit 122 then extracts the data packet used for performing the specific operation under the control of the IP tuner controller 121 (S210). Here, what is subjected to the data packet extraction used for performing the specific operation is the data packet that has undergone the first protocol-related process in the Ethernet driver 110. The first protocol-related process may be the IP/UDP-related process.

More specifically, the packet extracting unit 122 searches for port information and IP address of the IP header in the data packet and outputs corresponding data to the RTP processing unit. Further, in order for high-speed data processing, the packet extracting unit 122 may omit the process on the other information of the IP/UDP header.

Thereafter, the process treating unit 123 can perform the second protocol-related process on the data packet extracted by the packet extracting unit 122 under the control of the IP tuner controller 121. Here, the second protocol-related process may be the RTP-related process including RTP header removal. In addition, the RTP-related process may further include a process of examining the RTP header of the data packet extracted by the packet extracting unit 122 to obtain error information or to obtain network quality information.

Further, the data managing unit 124 performs a function for storing the data packet processed by the process treating unit 123 in a specific region of the buffer memory assigned to the decoder 140 under the control of the IP tuner controller 121 (S230).

A specific example of the operation of the data managing unit 124 will now be described. First, the data managing unit 124 can perform a function of securing a specific block of the buffer memory corresponding to a specific function that is to be performed in response to a request from the IPTV player 130 and then storing only the payload of the data output from the process treating unit 123 in the specific block.

If the operation of storing the payload for the specific block is complete, a flag can be configured to indicate that the operation of writing the specific block in the header of the buffer memory has completed. Then, the IPTV player 130 periodically monitors the flag, and when it has been identified that the flag has been configured, deliver the memory address corresponding to the specific block to the decoder 140.

Then, the decoder 140 can access the specific block based on the received memory address and perform the specific function requested by the IPTV player 130 using the data stored in the specific block.

Each of the data processing methods performed in an IPTV according to an embodiment of the present invention, as described above, may be implemented in a program that may be executed by various computing means and may be recorded in a computer readable medium. The computer readable medium may include, alone or in combination, a program command, a data file, and/or a data architecture. The program recorded in the medium may be specially designed or configured for the present invention or may be known to those of ordinary skill in the computer software art.

The computer readable recording medium may include, for example, magnetic media, such as hard disks, floppy disks, and magnetic tapes, optical recording media, such as CD-ROMs and DVDs, magneto-optical media such as floptical disks, ROMs, RAMs, flash memories, and other hardware devices specially configured to store and execute program commands. The program may include, for example, machine language codes created by a compiler, as well as high level language codes that may be executed by a computer using an interpreter. The hardware devices may be configured in one or more software modules for performing the operation according to an embodiment of the present invention, and vice versa.

The present invention encompasses various modifications to each of the examples and embodiments discussed herein.

As the present invention may be embodied in several forms without departing from essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalence of such metes and bounds are therefore intended to be embraced by the appended claims.

## Claims

1. An IPTV, Internet Protocol Television, receiving apparatus (100) comprising:
an Ethernet driver (110) configured to receive a broadcast signal including first header data and second header data, extract first header information from the received broadcast signal, extract a data packet by removing the first header data, and store the extracted data packet in a memory;
an IP tuner (120) configured to extract second header information from the extracted data packet stored in the memory, process the extracted data packet by removing the second header data, and store the processed data in a specific region of the memory;
a decoder (140) configured to access the processed data, stored in the specific region of the memory and from which the second header data has been removed, to perform broadcast reproduction, the specific region of the memory being assigned to the decoder (140); and
an output unit configured to output the reproduction data decoded by the decoder (140),
wherein the first header data consists of the UDP, User Datagram Protocol, and the IP, Internet Protocol, headers, and
the second header data is the RTP, Real-time Transport Protocol, header.

2. The IPTV receiving apparatus (100) of claim 1, wherein the IP tuner (120) comprises:
an IP tuner controller (121) configured to receive information for performing an operation requested by the IPTV player (130) from the IPTV player (130);
a packet extracting unit (122) configured to extract an RTP data packet, necessary for performing the requested operation from the extracted data packet output by the Ethernet driver (110) under control of the IP tuner controller (121);
a process treating unit (123) configured to remove the second header information on the data packet extracted by the packet extracting unit (122) under control of the IP tuner controller (121); and
a data managing unit (124) configured to store the remaining data payload processed by the process treating unit (123) in a specific region of the memory assigned to the decoder (140) under control of the IP tuner controller (121).

3. The IPTV receiving apparatus (100) of claim 2, wherein the data managing unit (124) is further configured to store only the remaining data payload of the data packet processed by the process treating unit (123) in the specific region of the memory, and
wherein the IPTV player (130) is configured to transfer an address of the specific region to the decoder (140) when the storing in the specific region of the memory is complete.

4. A method of controlling an IPTV, Internet Protocol Television, receiving apparatus (100), the method comprising:
receiving, via an Ethernet driver (110) of the IPTV, a broadcast signal including first header data and second header data, extracting first header information from the received broadcast signal, extracting a data packet by removing the first header data, and storing the extracted data packet in a memory;
extracting, via an IP tuner (120), second header information from the extracted data packet stored in the memory, processing the extracted data packet by removing the second header data, and storing the processed data in a specific region of the memory;
accessing, via a decoder (140), the processed data, stored in the specific region of the memory and from which the second header data has been removed, to perform broadcast reproduction, the specific region of the memory being assigned to the decoder (140); and
outputting, via an output unit of the IPTV, the reproduction data decoded by the decoder (140),
wherein the first header data consists of the UDP, User Datagram Protocol, and the IP, Internet Protocol, headers, and
the second header data is the RTP, Real-time Transport Protocol, header.

5. The method of claim 4, wherein the IP tuner (120) comprises:
an IP tuner controller (121) configured to receive information for performing an operation requested by the IPTV player (130) from the IPTV player (130);
a packet extracting unit (122) configured to extract an RTP data packet, necessary for performing the requested operation from the extracted data packet output by the Ethernet driver (110) under control of the IP tuner controller (121);
a process treating unit (123) configured to remove the second header information on the data packet extracted by the packet extracting unit (122) under control of the IP tuner controller (121); and
a data managing unit (124) configured to store the remaining data payload processed by the process treating unit (123) in a specific region of the buffer memory assigned to the decoder (140) under control of the IP tuner controller (121).

## Patentansprüche

1. IPTV, Internet Protocol TeleVision, Empfangsapparat (100) umfassend:
einen Ethernet-Treiber (110) eingerichtet zum Empfangen eines Rundfunksignals umfassend erste Header-Daten und zweite Header-Daten, zum Extrahieren erster Header-Information von dem empfangenen Rundfunksignal, zum Extrahieren eines Datenpakets durch Entfernen der ersten Header-Daten, und zum Speichern des extrahierten Datenpakets in einem Speicher;
einen IP-Tuner (120) eingerichtet zum Extrahieren zweiter Header-Information von dem in dem Speicher gespeicherten extrahierten Datenpaket, zum Verarbeiten des extrahierten Datenpakets durch Entfernen der zweiten Header-Daten, und zum Speichern der verarbeiteten Daten in einer bestimmten Region des Speichers;
einen Dekodierer (140) eingerichtet zum Zugreifen auf die verarbeiteten Daten, welche in der bestimmten Region des Speichers gespeichert sind und von welchen die zweiten Header-Daten entfernt wurden, um Rundfunk-Wiedergabe durchzuführen, wobei die bestimmte Region des Speichers dem Dekodierer (140) zugeordnet ist; und
eine Ausgabeeinheit eingerichtet zum Ausgeben der von dem Dekodierer (140) dekodierten Wiedergabedaten,
wobei die ersten Header-Daten aus den UDP, User Datagram Protocol, und den IP, Internet Protocol, Headern bestehen, und
die zweiten Header Daten den RTP, Real-time Transport Protocol, Header darstellen.

2. IPTV Empfangsapparat (100) nach Anspruch 1, wobei der IP-Tuner (120) umfasst:
eine IP-Tuner-Steuerung (121) eingerichtet zum Empfangen von Information zum Durchführen einer durch den IPTV-Spieler (130) angefragten Operation, von dem IPTV-Spieler (130);
eine Paket-Extrahier-Einheit (122) eingerichtet zum Extrahieren eines RTP-Datenpakets, welches notwendig ist, um die angefragte Operation durchzuführen, von dem durch den Ethernet-Treiber (110) ausgegebenen extrahierten Datenpaket, unter Steuerung der IP-Tuner-Steuerung (121);
eine Prozess-Bearbeitungseinheit (123) eingerichtet zum Entfernen der zweiten Header-Information auf dem durch die Paket-Extrahier-Einheit (122) extrahierten Datenpaket unter Steuerung der IP-Tuner-Steuerung (121); und
eine Datenverwaltungseinheit (124) eingerichtet zum Speichern der durch die Prozess-Bearbeitungseinheit (123) verarbeiteten verbleibenden Daten-Nutzlast in einer bestimmten Region des Speichers, welche dem Dekodierer (140) zugeordnet ist, unter Steuerung der IP-Tuner-Steuerung (121).

3. IPTV Empfangsapparat (100) nach Anspruch 2, wobei die Datenverwaltungseinheit (124) ferner eingerichtet ist zum Speichern lediglich der verbleibenden Daten-Nutzlast des von der Prozess-Bearbeitungseinheit (123) verarbeiteten Datenpakets in der bestimmten Region des Speichers, und
wobei der IPTV-Spieler (130) eingerichtet ist zum Übertragen einer Adresse der bestimmten Region an den Dekodierer (140) wenn das Speichern in die bestimmte Region des Speichers abgeschlossen ist.

4. Verfahren zum Steuern eines IPTV, Internet Protocol TeleVision, Empfangsapparats (100), wobei das Verfahren umfasst:
Empfangen, mittels eines Ethernet-Treibers (110) des IPTVs, eines Rundfunksignals umfassend erste Header-Daten und zweite Header-Daten, Extrahieren erster Header-Information von dem empfangenen Rundfunksignal, Extrahieren eines Datenpakets durch Entfernen der ersten Header-Daten, und Speichern des extrahierten Datenpakets in einem Speicher;
Extrahieren, mittels eines IP-Tuners (120), zweiter Header-Information von dem in dem Speicher gespeicherten extrahierten Datenpaket, Verarbeiten des extrahierten Datenpakets durch Entfernen der zweiten Header-Daten, und Speichern der verarbeiteten Daten in einer bestimmten Region des Speichers;
Zugreifen, mittels eines Dekodierers (140), auf die verarbeiteten Daten, welche in der bestimmten Region des Speichers gespeichert sind und von welchen die zweiten Header-Daten entfernt wurden, um Rundfunk-Wiedergabe durchzuführen, wobei die bestimmte Region des Speichers dem Dekodierer (140) zugeordnet ist; und
Ausgeben, mittels einer Ausgabeeinheit des IPTVs, der von dem Dekodierer (140) dekodierten Wiedergabedaten,
wobei die ersten Header-Daten aus den UDP, User Datagram Protocol, und den IP, Internet Protocol, Headern bestehen, und
die zweiten Header Daten den RTP, Real-time Transport Protocol, Header darstellen.

5. Verfahren nach Anspruch 4, wobei der IP-Tuner (120) umfasst:
eine IP-Tuner-Steuerung (121) eingerichtet zum Empfangen von Information zum Durchführen einer durch den IPTV-Spieler (130) angefragten Operation, von dem IPTV-Spieler (130);
eine Paket-Extrahier-Einheit (122) eingerichtet zum Extrahieren eines RTP-Datenpakets, welches notwendig ist, um die angefragte Operation durchzuführen, von dem durch den Ethernet-Treiber (110) ausgegebenen extrahierten Datenpaket, unter Steuerung der IP-Tuner-Steuerung (121);
eine Prozess-Bearbeitungseinheit (123) eingerichtet zum Entfernen der zweiten Header-Information auf dem durch die Paket-Extrahier-Einheit (122) extrahierten Datenpaket unter Steuerung der IP-Tuner-Steuerung (121); und
eine Datenverwaltungseinheit (124) eingerichtet zum Speichern der durch die Prozess-Bearbeitungseinheit (123) verarbeiteten verbleibenden Daten-Nutzlast in einer bestimmten Region des Puffer-Speichers, welche dem Dekodierer (140) zugeordnet ist, unter Steuerung der IP-Tuner-Steuerung (121).

## Revendications

1. Appareil de réception de télévision par protocole Internet, IPTV (100) comprenant :
un pilote Ethernet (110) conçu pour recevoir un signal de diffusion comprenant des premières données d'en-tête et des secondes données d'en-tête, extraire des premières informations d'en-tête du signal de diffusion reçu, extraire un paquet de données en supprimant les premières données d'en-tête, et stocker le paquet de données extrait dans une mémoire ;
un syntoniseur IP (120) conçu pour extraire des secondes informations d'entête du paquet de données extrait stocké dans la mémoire, traiter le paquet de données extrait en supprimant les secondes données d'en-tête, et stocker les données traitées dans une région spécifique de la mémoire ;
un décodeur (140) conçu pour accéder aux données traitées, stockées dans la région spécifique de la mémoire et à partir desquelles les secondes données d'entête ont été supprimées, pour exécuter une reproduction de diffusion, la région spécifique de la mémoire étant allouée au décodeur (140) ; et
une unité de sortie conçue pour délivrer en sortie les données de reproduction décodées par le décodeur (140),
dans lequel les premières données d'en-tête se composent d'en-têtes du protocole de datagramme utilisateur, UDP, et du protocole Internet, IP, et
les secondes données d'en-tête sont l'en-tête de protocole de transport en temps réel, RTP.

2. Appareil de réception IPTV (100) selon la revendication 1, dans lequel le syntoniseur IP (120) comprend :
un contrôleur de syntoniseur IP (121) conçu pour recevoir des informations permettant d'exécuter une opération demandée par le lecteur IPTV (130) provenant du lecteur IPTV (130) ;
une unité d'extraction de paquets (122) conçue pour extraire un paquet de données RTP, nécessaire pour exécuter l'opération demandée à partir du paquet de données extrait délivré en sortie par le pilote Ethernet (110) sous le contrôle du contrôleur de syntoniseur IP (121) ;
une unité de traitement de processus (123) conçue pour supprimer les secondes informations d'en-tête sur le paquet de données extrait par l'unité d'extraction de paquets (122) sous le contrôle du contrôleur de syntoniseur IP (121) ; et
une unité de gestion de données (124) conçue pour stocker la charge utile de données restantes traitées par l'unité de traitement de processus (123) dans une région spécifique de la mémoire allouée au décodeur (140) sous le contrôle du contrôleur de syntoniseur IP (121).

3. Appareil de réception IPTV (100) selon la revendication 2, dans lequel l'unité de gestion de données (124) est conçue en outre pour stocker seulement la charge utile de données restantes du paquet de données traité par l'unité de traitement de processus (123) dans la région spécifique de la mémoire, et
dans lequel le lecteur IPTV (130) est conçu pour transférer une adresse de la région spécifique au décodeur (140) lorsque le stockage dans la région spécifique de la mémoire est complet.

4. Procédé d'un appareil de réception de télévision par protocole Internet, IPTV (100), le procédé comprenant les étapes consistant à :
recevoir, par le biais d'un pilote Ethernet (110) de l'IPTV, un signal de diffusion comprenant des premières données d'en-tête et des secondes données d'en-tête, extraire des premières informations d'en-tête du signal de diffusion reçu, extraire un paquet de données en supprimant les premières données d'en-tête, et stocker le paquet de données extrait dans une mémoire ;
extraire, par le biais d'un syntoniseur IP (120), des secondes informations d'en-tête du paquet de données extrait stocké dans la mémoire, traiter le paquet de données extrait en supprimant les secondes données d'en-tête, et stocker les données traitées dans une région spécifique de la mémoire ;
accéder, par le biais d'un décodeur (140), aux données traitées, stockées dans la région spécifique de la mémoire et à partir desquelles les secondes données d'entête ont été supprimées, pour exécuter une reproduction de diffusion, la région spécifique de la mémoire étant allouée au décodeur (140) ; et
délivrer en sortie, par le biais d'une unité de sortie de l'IPTV, les données de reproduction décodées par le décodeur (140),
dans lequel les premières données d'en-tête se composent d'en-têtes du protocole de datagramme utilisateur, UDP, et du protocole Internet, IP, et
les secondes données d'en-tête sont l'en-tête de protocole de transport en temps réel, RTP.

5. Procédé selon la revendication 4, dans lequel le syntoniseur IP (120) comprend :
un contrôleur de syntoniseur IP (121) conçu pour recevoir des informations permettant d'exécuter une opération demandée par le lecteur IPTV (130) provenant du lecteur IPTV (130) ;
une unité d'extraction de paquets (122) conçue pour extraire un paquet de données RTP, nécessaire pour exécuter l'opération demandée à partir du paquet de données extrait délivré en sortie par le pilote Ethernet (110) sous le contrôle du contrôleur de syntoniseur IP (121) ;
une unité de traitement de processus (123) conçue pour supprimer les secondes informations d'en-tête sur le paquet de données extrait par l'unité d'extraction de paquets (122) sous le contrôle du contrôleur de syntoniseur IP (121) ; et
une unité de gestion de données (124) conçue pour stocker la charge utile de données restantes traitées par l'unité de traitement de processus (123) dans une région spécifique de la mémoire tampon allouée au décodeur (140) sous le contrôle du contrôleur de syntoniseur IP (121).
